# EUROPÄISCHE PATENTSCHRIFT

(11) **EP 3 734 559 B1**
(45) Veröffentlichungstag und Bekanntmachung des Hinweises auf die Patenterteilung: **26.02.2025**
(21) Anmeldenummer: 20171748.5
(22) Anmeldetag: 28.04.2020
(51) Int. Cl.: G07C 9/00, B60R 25/24

(54) **SICHERHEITSSYSTEM FÜR EIN FAHRZEUG**
SAFETY SYSTEM FOR A VEHICLE
SYSTÈME DE SÉCURITÉ POUR UN VÉHICULE

(30) Priorität: 30.04.2019 DE 102019111157
(43) Veröffentlichungstag der Anmeldung: 04.11.2020
(73) Patentinhaber: Huf Hülsbeck & Fürst GmbH & Co. KG, 42551 Velbert (DE)
(72) Erfinder: Steegmann, Dennis, 42555 Velbert (DE)
(74) Vertreter: Bals & Vogel Patentanwälte PartGmbB

(56) Entgegenhaltungen:
- WO-A1-2016/061804
- US-A1- 2018 025 639
- US-A1- 2018 174 452

## Beschreibung

Die vorliegende Erfindung betrifft ein Sicherheitssystem für ein Fahrzeug. Ferner bezieht sich die Erfindung auf ein Fahrzeug sowie ein Verfahren zur Lokalisierung und Authentifizierung eines mobilen Geräts durch ein Fahrzeug.

Aus dem Stand der Technik sind diverse Möglichkeiten bekannt, eine elektronische Authentifizierung eines Identifikationsgebers (ID-Geber) bei einem Fahrzeug durchzuführen. Ferner ist aus dem Stand der Technik bekannt, dass die Authentifizierung zusätzlich abgesichert werden kann, um Sicherheitsrisiken, wie der sogenannten "Relay-Station-Attack", zu begegnen.

Die WO 2016/061804 A1 offenbart beispielsweise ein Verfahren zur Fußgängererkennung und ein fahrzeugmontiertes Kommunikationssystem. Das Verfahren umfasst das Darstellen einer Positionsbeziehung zwischen einem Fahrzeug und einer Fußgängereinrichtung für einen Benutzer, wobei die Positionsbeziehung auf der Grundlage der Winkelverteilung der einfallenden Leistung eines ersten und eines zweiten Signals berechnet wird, wobei das erste und das zweite Signal von einer am Fahrzeug montierten Antenne von der Fußgängereinrichtung über ein drahtloses Netzwerk zu einem ersten Zeitpunkt bzw. zu einem zweiten Zeitpunkt empfangen wurden und das erste und das zweite Signal voneinander verschieden sind.

Aus der US 2018/174452 A1 ist ein Verfahren zum Betrieb eines Ad-hoc-Netzwerks zum Schutz eines Fußgängers eines stehenden Fahrzeugs vor einem fahrenden Fahrzeug bekannt, wobei das Netzwerk einen elektronischen Schlüssel für das stehende Fahrzeug, der von dem Fußgänger mitgeführt wird, eine elektronische Steuereinheit mit einem Car-Access-System und eine On-Board-Unit mit einem Vehicle-to-Vehicle-System als Komponenten eines Fahrzeugnetzwerks des stehenden Fahrzeugs umfasst.

Die US 2018/025639 A1 betrifft ein Zugangssystem für ein Fahrzeug, welches mit dem Fahrzeug-zu-Fahrzeug (V2V) Kommunikationssystem des Fahrzeugs zusammenwirkt.

Der verwendete Authentifizierungsmechanismus kann bspw. das Aussenden eines Wecksignals vom Fahrzeug an den ID-Geber, und das Empfangen eines Antwortsignals des ID-Gebers als Reaktion darauf umfassen. Die zusätzliche Absicherung kann nun darin bestehen, dass eine Entfernungsbestimmung zum ID-Geber durchgeführt wird.

Nachteilhaft bei den bekannten Lösungen ist, dass die Authentifizierung selbst und/oder die Absicherung durch diverse Einflüsse aus der Umgebung des Fahrzeuges gestört sein können. Bspw. ist eine Störung durch Reflexionen von elektromagnetischen Wellen oder Strahlen (Reflexion des Funksignals) denkbar, welche durch weitere Fahrzeuge in der Umgebung hervorgerufen werden.

Es ist daher eine Aufgabe der vorliegenden Erfindung, die voranstehend beschriebenen Nachteile zumindest teilweise zu beheben. Insbesondere ist es eine Aufgabe der vorliegenden Erfindung, eine verbesserte Authentifizierung und/oder Absicherung der elektronischen Authentifizierung des Identifikationsgebers an einem Sicherheitssystem des Fahrzeuges zu ermöglichen. Dabei soll vorzugsweise die Manipulationsmöglichkeiten bei der elektronische Authentifizierung des Identifikationsgebers am Sicherheitssystem des Fahrzeuges (nachfolgend nur kurz "Authentifizierung" genannt) verringert oder sogar vermieden werden.

Die voranstehende Aufgabe wird gelöst durch ein Sicherheitssystem mit den Merkmalen des unabhängigen Systemanspruchs, ein Fahrzeug mit den Merkmalen des unabhängigen Vorrichtungsanspruchs sowie durch ein Verfahren mit den Merkmalen des unabhängigen Verfahrensanspruchs. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Sicherheitssystem beschrieben sind, selbstverständlich auch im Zusammenhang mit dem erfindungsgemäßen Fahrzeug sowie dem erfindungsgemäßen Verfahren, und jeweils umgekehrt, sodass bezüglich der Offenbarung zu den einzelnen Erfindungsaspekten stets wechselseitig Bezug genommen wird bzw. werden kann.

Die Aufgabe wird insbesondere gelöst durch ein Sicherheitssystem für ein Fahrzeug (nachfolgend auch "Master-Fahrzeug"). Hierbei kann vorgesehen sein, dass das Sicherheitssystem zur Integration in das Fahrzeug ausgeführt ist, um vorzugsweise dauerhaft am Fahrzeug befestigt zu sein. In anderen Worten kann das Sicherheitssystem nach einer Montage in das Fahrzeug einen festen Bestandteil des Fahrzeuges bilden.

Das Sicherheitssystem ist zur Lokalisierung und Authentifizierung eines mobilen Geräts in einer Umgebung des Fahrzeuges ausgeführt.

Das mobile Gerät ist bspw. ein Identifikationsgeber (ID-Geber) oder ein Mobilfunkgerät wie ein Smartphone oder dergleichen, welches zur Aktivierung einer sicherheitsrelevanten Funktion am Fahrzeug dient. Erfindungsgemäß sind die nachfolgenden Komponenten des Sicherheitssystems vorgesehen:
- das mobile Gerät,
- wenigstens eine (insbesondere elektronische) Sende-Empfangsanordnung, um eine Fahrzeug-Kommunikation des Fahrzeuges mit wenigstens einem weiteren Fahrzeug (nachfolgend auch "Slave-Fahrzeug") in der Umgebung (des Master-Fahrzeuges) bereitzustellen, insbesondere um anhand der Fahrzeug-Kommunikation wenigstens eine Empfangsinformation zu ermitteln,
- wenigstens eine (insbesondere elektronische) Verarbeitungsanordnung, um die Lokalisierung des mobilen Geräts zumindest teilweise anhand der Fahrzeug-Kommunikation durchzuführen, insbesondere anhand der Empfangsinformation.

Die Komponenten können optional als Teil einer Fahrzeugelektronik, vorzugsweise Teil eines Steuergeräts für das Fahrzeug, ausgebildet sein. Die Verarbeitungsanordnung umfasst z. B. einen Mikrocontroller oder Prozessor oder dergleichen, um eine digitale Verarbeitung für die Lokalisierung durchzuführen. Hierzu kann die Verarbeitungsanordnung bspw. Signale, insbesondere Daten in der Form der Empfangsinformation, von der Sende-Empfangsanordnung empfangen, wobei die Signale für die Fahrzeug-Kommunikation und/oder eine Geräte-Kommunikation spezifisch sein können. Es kann sich bei den Daten bspw. um eine Abstandsinformationen zum weiteren Fahrzeug und/oder zum mobilen Gerät handeln.

Die Sende-Empfangsanordnung kann zur Bereitstellung, insbesondere Durchführung, der Fahrzeug-Kommunikation in der Form einer Funk-Kommunikation wenigstens eine der nachfolgenden Sende-Empfangs-Komponenten aufweisen:
- wenigstens eine Antenne zur Befestigung am Fahrzeug,
- wenigstens einen Transceiver zum Empfangen und Senden eines Kommunikationssignals (in der Form eines Funksignals), welcher hierzu mit der Antenne in Signalverbindung stehen kann,
- eine weitere Elektronik, vorzugsweise mit einer Modulationseinheit und/oder einem Mikrocontroller und/oder dergleichen, zur Bereitstellung der Kommunikationstechnologie für die Fahrzeug-Kommunikation, welche hierzu mit dem Transceiver in Signalverbindung stehen kann.

Die Sende-Empfangsanordnung kann wenigstens eine oder wenigstens zwei oder wenigstens drei Sende-Empfangseinheit(en) aufweisen, jeweils mit zumindest einer der vorgenannten Sende-Empfangs-Komponenten, vorzugsweise zur Bereitstellung unterschiedlicher Kommunikationstechnologien.

Das Sicherheitssystem ist erfindungsgemäß dazu ausgeführt, eine Authentifizierung durch eine Kommunikation der Sende-Empfangsanordnung mit dem mobilen Gerät durchzuführen. Zur Absicherung der Authentifizierung ist eine Lokalisierung des mobilen Geräts vorgesehen. Es kann z. B. eine Entfernungsmessung und/oder Positionsbestimmung des mobilen Geräts mittels ToF (Time-of-Flight, also Signallaufzeitmessung) oder über UWB (Ultrabreitband) oder BLE (Bluetooth Low Energie) oder vergleichbaren Kommunikationstechnologie vorgesehen sein, welche auch durch die Sende-Empfangsanordnung bereitgestellt werden kann. Auf diese Weise kann gewährleistet werden, dass das mobile Gerät einen Maximalabstand zum Fahrzeug nicht überschreitet. Jedoch können bei den genannten Kommunikationstechnologien starke Schwankungen und Beeinträchtigungen der Lokalisierung durch Reflexionen des zur Kommunikation genutzten Kommunikationssignals hervorgerufen werden. Solche Reflexionen werden bspw. durch reflektierende Strukturen, z. B. auch weiterer Fahrzeuge in der Umgebung des Fahrzeuges, hervorgerufen.

Es wird im Rahmen der Erfindung eine Verbesserung herkömmlicher Lösungen vorteilhafterweise dadurch erzielt, dass sich das Fahrzeug (im Sinne eines "Masters", und daher auch im folgenden Master-Fahrzeug genannt) mit dem mindestens einen weiteren Fahrzeug (im vorgenannten Sinne auch als "Slave-Fahrzeug" bezeichnet) im Umkreis vernetzt. Das Master-Fahrzeug (auch: Haupt-Fahrzeug) ist dabei das Fahrzeug, welches die vorgenannte Sende-Empfangsanordnung aufweist, und bei welchem sich das mobile Gerät ggf. rechtmäßig authentifizieren kann, um eine sicherheitsrelevante Funktion zu initiieren. Die sicherheitsrelevante Funktion ist z. B. die Freigabe eines Zugangs zum Master-Fahrzeug durch die Authentifizierung. Die Freigabe des Zugangs kann das Entriegeln des Fahrzeuges, optional zusätzlich das Öffnen von wenigstens einer Tür und/oder die Freigabe des Motorstarts, umfassen. Der Umkreis kann die nähere Umgebung des Master-Fahrzeuges sein, wie ein Parkplatz oder eine Straße. Auf diese Weise kann das Master-Fahrzeug eine Mehrzahl, insbesondere ein Array, von Empfängern nutzen, welche für die Fahrzeug-Kommunikation zur Verfügung stehen.

Die Slave-Fahrzeuge (auch: Neben-Fahrzeuge) können über die Fahrzeug-Kommunikation mit dem Master-Fahrzeug kommunizieren, z. B. als Reaktion auf eine Anfrage durch das Master-Fahrzeug eine Antwort senden. Diese Antwort umfasst insbesondere wenigstens eine Geräteinformation, d. h. eine Information über das mobile Gerät.

Bspw. kann die Geräteinformation inhaltlich eine Geräteantwort des mobilen Geräts umfassen, welche über die Antwort von dem wenigstens einen Slave-Fahrzeug an das Master-Fahrzeug mittels der Fahrzeug-Kommunikation weitervermittelt wird.

Eine Geräteantwort im Sinne der Erfindung umfasst bspw. Daten eines Antwortsignals, insbesondere Funksignal, welches als Reaktion auf ein Empfangen eines Wecksignals des Master-Fahrzeuges und/oder des Slave-Fahrzeuges durch das mobile Gerät ausgesendet wird. Das Wecksignal wird hierzu bspw. über UWB oder Bluetooth oder BLE oder HF (High Frequency) oder LF (Low Frequency) durch das Master- und/oder Slave-Fahrzeug ausgesendet, optional auch über die Geräte-Kommunikation, insbesondere als ein Broadcast-Signal. Das Wecksignal kann daraufhin durch das mobile Gerät empfangen werden, und damit das mobile Gerät zum Aussenden des Antwortsignals veranlassen. Inhaltlich kann die Geräteantwort eine Information umfassen, welche für die Authentifizierung spezifisch ist, z. B. einen Authentifizierungscode oder dergleichen. Ferner kann die Geräteantwort auch eine Information umfassen, welche für eine Entfernung und/oder Position des mobilen Geräts spezifisch ist. Diese Information ist bspw. eine Signalstärke, mit welcher das Wecksignal durch das mobile Gerät empfangen wurde, oder ein Ergebnis einer ToF-Analyse des Wecksignals.

Ferner kann es möglich sein, dass das Slave-Fahrzeug selbst eine Lokalisierung des mobilen Geräts durchführt, und eine Information über diese Lokalisierung bereitstellt. Daher kann die Geräteinformation inhaltlich auch diese durch das Slave-Fahrzeug ermittelte Information über die Lokalisierung (nachfolgend auch kurz: Lokalisierungsinformation) umfassen. Diese Information kann in der Form einer Information über eine Geräte-Kommunikation vorliegen, welche das Slave-Fahrzeug mit dem mobilen Gerät bereitstellt, um z. B. die Geräteantwort vom mobilen Gerät zu empfangen. Diese Information kann ferner ein Ergebnis einer Entfernungsmessung und/oder Positionsbestimmung des mobilen Geräts durch das Slave-Fahrzeug umfassen. Diese Entfernungsmessung und/oder Positionsbestimmung kann vorzugsweise anhand der Geräte-Kommunikation des Slave-Fahrzeuges und/oder der Geräteantwort, welche durch das Slave-Fahrzeug empfangen wird, durchgeführt werden. Die Entfernungsmessung und/oder Positionsbestimmung kann außerdem z. B. durch ein Ausmessen, wie einer Signalstärke oder einer Signallaufzeit (ToF, engl.: Time of Flight) der Geräteantwort erfolgen. Die Information über die Lokalisierung kann z. B. unmittelbar die Position und/oder Entfernung zum mobilen Gerät aufweisen, oder auch die Messwerte (wie die Signalstärke oder die Signallaufzeit). Wie bei einer GPS-Ortung kann durch die erfindungsgemäß vorteilhafte Nutzung mehrerer Slave-Fahrzeuge (also Teilnehmer der Fahrzeug-Kommunikation) die Genauigkeit der Lokalisierung verbessert werden, oder auch eine Plausibilisierung der Lokalisierung des mobilen Geräts erst ermöglicht werden.

Es ist besonders vorteilhaft, wenn wenigstens eines der weiteren Fahrzeuge (Slave-Fahrzeuge) ein parkendes Fahrzeug ist, bzw. sich im Stillstand befindet, und/oder eine Geschwindigkeit von 0 km/h hat. Auf diese Weise ist es sehr zuverlässig möglich, dass das Fahrzeug (Master-Fahrzeug) die Position der weiteren Fahrzeuge mittels der Fahrzeug-Kommunikation ermittelt kann. In diesem Fall können z. B. Informationen durch das Slave-Fahrzeug selbst ermittelt werden, wie Messwerte, zur Lokalisierung des mobilen Geräts gemittelt werden, um die Genauigkeit der Lokalisierung zu erhöhen. Diese Mittelung kann über eine bestimmte, ggf. vordefinierte oder dynamisch bestimmte, Zeitdauer erfolgen. Die dynamische Bestimmung erfolgt bspw. in Abhängigkeit von wenigstens einem Parameter, welcher für die Zuverlässigkeit der Lokalisierung spezifisch ist, wie einer Schwankung und/oder Fehlermerkmale der Messwerte oder dergleichen.

Vorteilhaft ist es zudem, wenn das Fahrzeug (insbesondere das Fahrzeug als Master-Fahrzeug, zusätzlich ggf. auch das wenigstens eine weitere Fahrzeug, dann als Slave-Fahrzeug) als ein Kraftfahrzeug, insbesondere als ein Hybridfahrzeug oder als ein Elektrofahrzeug ausgebildet ist, vorzugsweise mit einem Hochvolt-Bordnetz und/oder einem Elektromotor. Außerdem kann es möglich sein, dass dieses Fahrzeug als ein Brennstoffzellenfahrzeug und/oder Personenkraftfahrzeug und/oder semi-autonomes oder autonomes Fahrzeug ausgebildet ist. Vorteilhafterweise weist dieses Fahrzeug das Sicherheitssystem auf, welches z. B. durch die Kommunikation mit dem mobilen Gerät, insbesondere einem Identifikationsgeber (ID-Geber), eine Authentifizierung ermöglicht. In Abhängigkeit von der Kommunikation und/oder der Authentifizierung kann wenigstens eine Funktion des Fahrzeuges aktiviert werden. Falls hierzu die Authentifizierung des mobilen Geräts notwendig ist, kann es sich bei der Funktion um eine sicherheitsrelevante Funktion handeln, wie ein Entriegeln des Fahrzeuges oder eine Freigabe eines Motorstarts. Somit kann das Sicherheitssystem auch als ein passives Zugangssystem ausgebildet sein, welches ohne aktive manuelle Betätigung des mobilen Geräts die Authentifizierung und/oder die Aktivierung der Funktion bei Detektion der Annäherung des mobilen Geräts an das Fahrzeug initiiert. Hierzu wird bspw. wiederholt ein Wecksignal durch das Sicherheitssystem ausgesendet, welches durch das mobile Gerät bei der Annäherung empfangen werden kann, und dann die Authentifizierung auslöst. Auch kann die Funktion eine Aktivierung einer Fahrzeugbeleuchtung und/oder ein Betätigen (Öffnen und/oder Schließen) einer Klappe (z. B. Front- oder Heck- oder Seitenklappe bzw. -tür) betreffen. Bspw. wird automatisch bei der Detektion der Annäherung die Fahrzeugbeleuchtung aktiviert und/oder bei der Detektion einer Geste eines Benutzers die Klappe betätigt.

Es kann von Vorteil sein, wenn im Rahmen der Erfindung die Sende-Empfangsanordnung auch für eine unmittelbare Geräte-Kommunikation des Fahrzeuges mit dem mobilen Gerät ausgeführt ist, wobei vorzugsweise die Verarbeitungsanordnung in Signalverbindung, insbesondere Datenverbindung, mit der Sende-Empfangsanordnung steht, um das mobile Gerät anhand der Geräte-Kommunikation, insbesondere anhand der wenigstens einen Empfangsinformation, welche durch die Geräte-Kommunikation ermittelt wurde, unmittelbar zu lokalisieren. Hierzu kann z. B. über die Signalverbindung die Empfangsinformation von der Sende-Empfangsanordnung an die Verarbeitungsanordnung übertragen werden. Die Geräte-Kommunikation ermöglicht z. B. eine Übertragung von Authentifizierungsinformation zur Authentifizierung vom mobilen Gerät an das Fahrzeug. Ferner kann die Geräte-Kommunikation ggf. auch die unmittelbare Lokalisierung bereitstellen, z. B. durch Informationen über die Signalstärke oder dergleichen. Die Authentifizierungsinformation und/oder die Informationen zur Lokalisierung können über die wenigstens eine Empfangsinformation für die Verarbeitungsanordnung bereitgestellt werden, um eine zuverlässige elektronische Lokalisierung durch die Verarbeitungsanordnung zu ermöglichen.

Auch ist es denkbar, dass die Verarbeitungsanordnung in der Signalverbindung, insbesondere Datenverbindung, mit der Sende-Empfangsanordnung steht, um anhand der Fahrzeug-Kommunikation, insbesondere anhand der wenigstens einen Empfangsinformation, welche durch die Fahrzeug-Kommunikation ermittelt wurde, zumindest eine der nachfolgenden Funktionen zur Lokalisierung durchzuführen:
- Plausibilisieren der unmittelbaren Lokalisierung,
- Ergänzen und/oder Korrigieren der unmittelbaren Lokalisierung, um eine Genauigkeit der Lokalisierung zu erhöhen,
- Mittelbares Lokalisieren des mobilen Geräts über das wenigstens eine weitere Fahrzeug.

Die wenigstens eine Empfangsinformation kann neben den Informationen der unmittelbar durchgeführten Geräte-Kommunikation (wie der Authentifizierungsinformation und/oder die Informationen zur Lokalisierung) auch Informationen der Fahrzeug-Kommunikation für die Verarbeitungsanordnung bereitstellen. Wie das mobile Gerät bei der Geräte-Kommunikation ist bei der Fahrzeug-Kommunikation eines der weiteren Fahrzeuge ein unmittelbarer Kommunikationsteilnehmer für die Kommunikation mit der Sende-Empfangsanordnung. Die Fahrzeug-Kommunikation kann zumindest teilweise gleichzeitig oder abwechselnd und/oder zeitlich versetzt zur Geräte-Kommunikation durchgeführt werden.

Bei der Geräte-Kommunikation kann es sich um die übliche Form der Authentifizierung und/oder Absicherung der Authentifizierung handeln, bei welcher die Kommunikation zwischen dem mobilen Gerät und dem Fahrzeug direkt erfolgt. Bei der Fahrzeug-Kommunikation erfolgt hingegen die Kommunikation zwischen dem Master- und dem wenigstens einen Slave-Fahrzeug, um über diese Fahrzeug-Kommunikation Informationen über das mobile Gerät auszutauschen. Damit kann eine verbesserte Lokalisierung des mobilen Geräts und/oder Absicherung der Authentifizierung und/oder höhere Zuverlässigkeit bei der Authentifizierung erzielt werden.

Es kann weiter möglich sein, dass die Sende-Empfangsanordnung wenigstens eine Sende-Empfangseinheit aufweist, welche als eine Funk-, bevorzugt als eine HF- oder LF- oder NFC- (Near Field Communication) oder UWB- oder WLAN- (Wireless Local Area Network) oder Bluetooth-, besonders bevorzugt als eine Bluetooth-Low-Energy- (BLE), Schnittstelle, ausgebildet ist, um die Fahrzeug-Kommunikation, insbesondere vernetzt mit einer Mehrzahl verschiedener weiterer Fahrzeuge, bereitzustellen. Damit können diverse Kommunikationstechnologien zur Vernetzung genutzt werden, damit möglichst viele Fahrzeuge als Kommunikationsteilnehmer in Frage kommen.

Ferner ist es optional vorgesehen, dass die Sende-Empfangsanordnung dazu ausgeführt ist, über die Fahrzeug-Kommunikation eine Geräteinformation über wenigstens eine weitere Lokalisierung des mobilen Geräts durch das wenigstens eine weitere Fahrzeug zu empfangen. Außerdem kann es möglich sein, dass die Verarbeitungsanordnung dazu ausgeführt ist, zur Lokalisierung des mobilen Geräts eine Fahrzeug-Lokalisierung des wenigstens einen weiteren Fahrzeuges durchzuführen, um die Geräteinformation mit einem Ergebnis der Fahrzeug-Lokalisierung zu vergleichen, um selbst die Lokalisierung des mobilen Geräts mittelbar anhand der Geräteinformation durchzuführen. In anderen Worten kann zunächst das weitere Fahrzeug die weitere Lokalisierung des mobilen Geräts durchführen, z. B. anhand einer Geräte-Kommunikation des weiteren Fahrzeuges mit dem mobilen Gerät. Über diese Geräte-Kommunikation des weiteren Fahrzeuges (als Slave-Fahrzeug) kann ggf. auch eine Geräteantwort empfangen werden. Für diese weitere Lokalisierung kann z. B. eine Information über eine Signalstärke dienen, mit welcher die Geräteantwort durch das weitere Fahrzeug empfangen wurde. Auch kann z. B. eine ToF-Analyse zur Lokalisierung durchgeführt werden. Die Information über die Signalstärke und/oder ein Ergebnis der ToF-Analyse können als eine durch das Slave-Fahrzeug ermittelte Information über die Lokalisierung aufgefasst werden. Diese Information ist für die Position des mobilen Geräts relativ zum weiteren Fahrzeug spezifisch. Die Geräteantwort und/oder die durch das Slave-Fahrzeug ermittelte Information über die Lokalisierung kann dann in der Form der Geräteinformation durch das weitere Fahrzeug mittels der Fahrzeug-Kommunikation an das Master-Fahrzeug übermittelt werden. Vom Master-Fahrzeug kann die übermittelte Geräteinformation genutzt werden, insbesondere durch die Verarbeitungsanordnung, die Lokalisierung des mobilen Geräts mittelbar durchzuführen. Da die Position relativ zum weiteren Fahrzeug gegeben ist, kann der Vergleich der Geräteinformation mit dem Ergebnis der Fahrzeug-Lokalisierung notwendig sein. Die Fahrzeug-Lokalisierung wird z. B. anhand der Fahrzeug-Kommunikation durchgeführt, bspw. durch die Auswertung der Signalstärke und/oder einer ToF-Analyse. Damit ermöglicht die Fahrzeug-Lokalisierung die Ermittlung der Position des weiteren Fahrzeuges relativ zum Master-Fahrzeug. Diese Position kann bei dem Vergleich genutzt werden, um auch die Position des mobilen Geräts relativ zum Master-Fahrzeug zu bestimmen.

Zudem ist im Rahmen der Erfindung denkbar, dass die Verarbeitungsanordnung dazu ausgeführt ist, zur Lokalisierung des mobilen Geräts und/oder zur Fahrzeug-Lokalisierung des wenigstens einen weiteren Fahrzeuges eine Auswertung der Fahrzeug-Kommunikation und/oder einer Geräte-Kommunikation durchzuführen, wobei die Auswertung wenigstens eine der nachfolgenden Erfassungen bereitstellt:
- eine Entfernungsmessung einer Entfernung des mobilen Geräts und/oder des weiteren Fahrzeuges relativ zum Fahrzeug,
- eine Richtungserfassung einer Richtung des mobilen Geräts und/oder des weiteren Fahrzeuges relativ zum Fahrzeug,
wobei vorzugsweise die Auswertung hierzu eine Signalauswertung, bevorzugt Messung einer Signallaufzeit und/oder einer Signalstärke, und/oder eine Empfangswinkelbestimmung eines durch die Fahrzeug-Kommunikation und/oder durch die Geräte-Kommunikation empfangenen Kommunikationssignals bereitstellt. Das Kommunikationssignal dient z. B. dazu, die Geräteinformation zu übertragen. Anhand der Entfernungsmessung und der Richtungserfassung kann zuverlässig die relative Position zum Fahrzeug ermittelt werden. Wenn diese Informationen durch die Geräteinformation auch für weitere Fahrzeuge (z. B. relativ zum mobilen Gerät) vorhanden sind, kann die Position des mobilen Geräts relativ zum Fahrzeug sehr genau ermittelt werden.

Auch ist es optional denkbar, dass das Fahrzeug Teil des Sicherheitssystems ist, und die Sende-Empfangsanordnung am Fahrzeug angeordnet, insbesondere fest mit dem Fahrzeug verbunden ist, und vorzugsweise mehrere Sende-Empfangseinheiten der Sende-Empfangsanordnung an unterschiedlichen Positionen am Fahrzeug angeordnet sind, um jeweils die Fahrzeug-Kommunikation und/oder eine Geräte-Kommunikation positionsspezifisch bereitzustellen. Die Nutzung unterschiedlicher Positionen hat dabei den Vorteil, dass durch den Vergleich der Kommunikationssignale unterschiedlicher der Sende-Empfangseinheiten die Genauigkeit der Lokalisierung verbessert werden kann.

Es kann ferner möglich sein, dass die Verarbeitungsanordnung dazu ausgeführt ist, die Fahrzeug-Kommunikation und/oder eine Geräte-Kommunikation wenigstens einer Sende-Empfangseinheit der Sende-Empfangsanordnung in Abhängigkeit von einer Position der jeweiligen Sende-Empfangseinheit und damit positionsspezifisch auszuwerten, vorzugsweise durch eine Auswertung der Signalstärke bei (Kommunikationssignalen) der jeweiligen Sende-Empfangseinheit und/oder durch einen Vergleich verschiedener Signalstärken bei unterschiedlichen Sende-Empfangseinheiten, insbesondere um eine Empfangswinkelbestimmung eines Kommunikationssignals der jeweiligen Fahrzeug- und/oder Geräte-Kommunikation durchzuführen. Damit ermöglicht es die Kenntnis der Positionen der Sende-Empfangseinheit am Fahrzeug, anhand der Signalstärke der empfangenen Kommunikationssignale den Winkel der Kommunikationssignale zu bestimmen. Auf diese Weise kann die Genauigkeit der Lokalisierung verbessert werden.

Von weiterem Vorteil kann vorgesehen sein, dass die Sende-Empfangsanordnung dazu ausgeführt ist, ein Netzwerk, vorzugsweise Bluetooth-Netzwerk, mit dem Fahrzeug (Master-Fahrzeug) und dem wenigstens einem weiteren Fahrzeug (Slave-Fahrzeug) jeweils als Teilnehmer des Netzwerkes bereitzustellen, bei welchem insbesondere die Sende-Empfangsanordnung des Fahrzeuges als ein Master des Netzwerkes ausgeführt ist, um die Kommunikation des Netzwerkes für die weiteren Teilnehmer zu steuern. Somit kann vernetzt die Lokalisierung des mobilen Geräts ermöglicht werden.

Es ist erfindungsgemäß vorgesehen, dass das mobile Gerät ein Teil des Sicherheitssystems ist. Es ist vorgesehen, dass das mobile Gerät als ein Mobilfunkgerät, insbesondere Smartphone, oder als ein für das Fahrzeug spezifischer mobiler Identifikationsgeber ausgebildet ist, und zur Bereitstellung der Authentifizierung am Fahrzeug zur Freigabe und/oder Auslösung einer sicherheitsrelevanten Fahrzeugfunktion ausgebildet ist, bevorzugt durch die Aussendung einer Geräteantwort über ein Kommunikationssignal der Geräte-Kommunikation. Die Geräteantwort umfasst z. B. Informationen zur Authentifizierung, wie einen Code oder Informationen einer Challenge-Response oder dergleichen. Die Geräteantwort kann ggf. über die Fahrzeug-Kommunikation an das Fahrzeug weitervermittelt werden. Zusätzlich kann ggf. eine Geräteinformation über einen Standort des Fahrzeuges über die Fahrzeug-Kommunikation weitervermittelt werden, welcher durch das weitere Fahrzeug durch eine weitere Lokalisierung des mobilen Geräts ermittelt wurde.

Ebenfalls Gegenstand der Erfindung ist ein Fahrzeug, vorzugsweise Kraftfahrzeug und/oder Personenkraftfahrzeug. Das Fahrzeug weist ein erfindungsgemäßes Sicherheitssystem auf, zur Lokalisierung und Authentifizierung eines mobilen Geräts in einer Umgebung des Fahrzeuges.

Damit bringt das erfindungsgemäße Fahrzeug die gleichen Vorteile mit sich, wie sie ausführlich mit Bezug auf ein erfindungsgemäßes Sicherheitssystem beschrieben worden sind.

Ebenfalls Gegenstand der Erfindung ist ein Verfahren zur Lokalisierung und Authentifizierung eines mobilen Geräts durch ein Fahrzeug (Master-Fahrzeug) in einer Umgebung des Fahrzeuges.

Hierbei ist vorgesehen, dass die nachfolgenden Schritte durchgeführt werden, wobei ggf. einzelne Schritte auch wiederholt durchgeführt werden können:
a) Bereitstellen einer Fahrzeug-Kommunikation des Fahrzeuges mit wenigstens einem weiteren Fahrzeug (Slave-Fahrzeug) in der Umgebung,
b) Durchführen der Lokalisierung des mobilen Geräts zumindest teilweise anhand der Fahrzeug-Kommunikation,
c) Authentifizieren des mobilen Geräts (10), durch eine Kommunikation der Sende-Empfangsvorrichtung (100) mit dem mobilen Gerät (10) zur Freigabe und/oder Auslösung einer sicherheitsrelevanten Fahrzeugfunktion, wobei die Lokalisierung des mobilen Geräts (10) die Authentifizierung absichert.

Damit bringt das erfindungsgemäße Verfahren die gleichen Vorteile mit sich, wie sie ausführlich mit Bezug auf ein erfindungsgemäßes Sicherheitssystem beschrieben worden sind. Zudem ist vorgesehen, dass das Verfahren durch ein erfindungsgemäßes Sicherheitssystem durchgeführt wird, wobei Schritt a) durch die Sende-Empfangsanordnung und Schritt b) durch die Verarbeitungsanordnung des Sicherheitssystems durchgeführt werden.

Das erfindungsgemäße Verfahren sieht vorteilhafterweise die Durchführung der Fahrzeug-Kommunikation in der Form einer vernetzten Kommunikation mit einer Mehrzahl an weiteren Fahrzeugen vor. Dabei kann eine Weitervermittlung (Weiterleitung) einer Geräteinformation, insbesondere einer Geräteantwort und/oder einer Information über eine weitere Lokalisierung (Lokalisierungsinformation) wenigstens eines der weiteren Fahrzeuge, über die Fahrzeug-Kommunikation erfolgen. Die Information über die weitere Lokalisierung umfasst insbesondere eine Information über eine Entfernung und/oder eine Richtung des mobilen Geräts relativ zum weiteren Fahrzeug. Durch die Nutzung dieser Geräteinformation bei dem Master-Fahrzeug kann die Lokalisierung durch das Master-Fahrzeug verbessert werden, insbesondere wenn zusätzlich zur Nutzung der Geräteinformation eine eigene Lokalisierung des mobilen Geräts durch das Master-Fahrzeug durchgeführt wird. Auch kann eine Reichweite für die Lokalisierung und/oder den Empfang der Geräteantwort erhöht werden, da die Lokalisierung und/oder der Empfang nicht unbedingt unmittelbar durch das Master-Fahrzeug erfolgen muss. Insbesondere wenn das Master-Fahrzeug und/oder die weiteren Fahrzeuge als stillstehende (parkende) Fahrzeuge ausgeführt sind, kann die Lokalisierung weiter verbessert werden. In diesem Falle ist z. B. eine Mittelung der erfassten Informationen über die weitere Lokalisierung denkbar.

Es kann möglich sein, dass eine Lernphase zur Erfassung der Umgebung des Fahrzeuges durchgeführt wird. Hierbei wird z. B. eine Position der weiteren Fahrzeuge relativ zum Master-Fahrzeug ermittelt, also ein Abbild der Umgebung erfasst. Dabei kann anhand der Umgebungserfassung des Masterfahrzeuges eine exakte Positionsbestimmung des mobilen Geräts ermöglicht werden, auch bei starken Reflexionen des Kommunikationssignals (z. B eines Bluetooth-Low-Energy Signals) der Fahrzeug- und/oder Gerätekommunikation in der Umgebung oder auch bei einer unbefugten RSA (Relay Station Attack) Verlängerung.

Es kann möglich sein, dass das Master-Fahrzeug die Position der Slave-Fahrzeuge anhand einer Entfernungsmessung (z. B. mittels der Auswertung einer Signalstärke oder Laufzeitmessung) und Winkelbestimmung (z. B. ermittelbar durch einen Vergleich der Signalstärken bei der Kommunikation bei unterschiedlichen Sende-Empfangseinheiten des Master-Fahrzeuges) bei der Fahrzeug-Kommunikation durchführt.

Es kann, insbesondere im Rahmen eines erfindungsgemäßen Verfahrens, möglich sein, dass das Fahrzeug (Master-Fahrzeug) eine Überwachungsanordnung aufweist, um einen Zugangswunsch zu detektieren. Dabei kann die Überwachungsanordnung z. B. einen Annäherungssensor, wie einen kapazitiven Sensor, aufweisen. Dieser ist bspw. im Bereich der Heckklappe oder im Türgriff angeordnet, um die Annäherung eines Benutzers zu detektieren. Diese Annäherung wird dann als Zugangswunsch interpretiert, um die sicherheitsrelevante Funktion zu initiieren. Die Detektion des Zugangswunsches kann die Authentifizierung initiieren, vorteilhafterweise durch das Aussenden eines Wecksignals an das mobile Gerät. In diesem Falle kann das mobile Gerät als ID-Geber fungieren, indem es bei Empfang des Wecksignals ein Antwortsignal aussendet. Dieses Antwortsignal kann ggf. über die Geräte-Kommunikation unmittelbar - also direkt - von dem Fahrzeug empfangen werden (als Geräteantwort) und/oder durch wenigstens ein weiteres Fahrzeug empfangen werden (ebenfalls als Geräteantwort). Diese Geräteantwort kann eine Authentifizierungsinformation umfassen, wie einen Code oder dergleichen. Um die Sicherheit jedoch weiter zu erhöhen, kann eine Lokalisierung des mobilen Geräts anhand der Geräteantwort vorgesehen sein. Hierzu findet z. B. Entfernungsmessung, insbesondere eine Laufzeitmessung oder Signalauswertung, der Antwort statt, um eine Entfernung des mobilen Geräts zum Fahrzeug (Master- und/oder Slave-Fahrzeug) zu ermitteln. Zusätzlich kann eine Richtung der Geräteantwort ermittelt werden, aus welcher die Geräteantwort beim Fahrzeug (Master- und/oder Slave-Fahrzeug) empfangen wurde, bzw. in welcher Richtung sich das mobile Gerät befindet. Die Entfernung und/oder Richtung bilden somit Lokalisierungsinformationen (Informationen über die Lokalisierung), welche durch das Master-fahrzeug über die Geräte-Kommunikation unmittelbar, direkt, oder durch wenigstens ein weiteres (Slave-) Fahrzeug über die Geräte-Kommunikation unmittelbar, direkt ermittelt werden kann. Um die Lokalisierung bei dem Master-Fahrzeug zu verbessern, kann die Fahrzeug-Kommunikation genutzt werden, um die Lokalisierungsinformationen der/des Slave-Fahrzeuges in der Form einer Geräteinformation an das Master-Fahrzeug zu übertragen. Zusätzlich kann die Geräteinformation auch die Geräteantwort umfassen, z. B. zur Kontrolle durch das Master-Fahrzeug.

Es ist ferner denkbar, dass Schritt a) wenigstens einen der nachfolgenden Schritte umfasst:
- Empfangen wenigstens einer Geräteinformation über einen Standort des mobilen Geräts relativ zu dem wenigstens einen weiteren Fahrzeug, ermittelt durch das wenigstens eine weitere Fahrzeug mittels wenigstens einer weiteren Lokalisierung des mobilen Geräts,
- Empfangen einer Geräteinformation über einen Standort des mobilen Geräts relativ zu einem der weiteren Fahrzeuge, ermittelt durch das eine weitere Fahrzeug mittels einer weiteren Lokalisierung des mobilen Geräts, und weitervermittelt über wenigstens ein anderes der weiteren Fahrzeuge,
- Empfangen einer Geräteantwort mit Authentifizierungsinformationen des mobilen Geräts, welche unmittelbar durch das oder eines der weiteren Fahrzeuge vom mobilen Gerät empfangen ist, und optional über wenigstens ein anderes der weiteren Fahrzeuge über eine weitere Fahrzeug-Kommunikation weitervermittelt ist,
- Aussenden eines Wecksignals an das mobile Gerät, um eine Aussendung der Geräteantwort durch das mobile Gerät an das wenigstens eine weitere Fahrzeug zu initiieren,
wobei das Empfangen jeweils über die Fahrzeug-Kommunikation erfolgen kann. Dies hat den Vorteil, dass die Geräteinformation nicht nur unmittelbar am Master-Fahrzeug ermittelt werden kann, sondern auch durch weitere Fahrzeuge ermittelt und zur Verbesserung der Lokalisierung bei dem Master-Fahrzeug bereitgestellt werden kann.

Ferner kann es im Rahmen der Erfindung vorgesehen sein, dass das Fahrzeug in der Form eines Master-Fahrzeuges ein Netzwerk mit den weiteren Fahrzeugen jeweils als Slave-Fahrzeuge erzeugt, in welchem durch wenigstens eines der Slave-Fahrzeuge:
- eine Geräteinformation (mit einer Lokalisierungsinformation) über einen Standort des mobilen Geräts ermittelt wird, und/oder
- eine Geräteantwort des mobilen Geräts empfangen wird,
und jeweils untereinander weitervermittelt werden, um die Geräteinformation und/oder Geräteantwort an das Master-Fahrzeug über die Fahrzeug-Kommunikation zu übertragen, um somit die Reichweite des Master-Fahrzeuges für Lokalisierung des mobilen Geräts und/oder das Empfangen der Geräteantwort zu erhöhen. Dabei kann die Geräteantwort ggf. auch als Teil der Geräteinformation übertragen werden.

Es kann optional möglich sein, dass Schritt b) wenigstens einen der nachfolgenden Schritte umfasst:
- Unmittelbares Lokalisieren des mobilen Geräts durch das Fahrzeug, um eine unmittelbare Geräteinformation über einen Standort des mobilen Geräts relativ zum Fahrzeug zu ermitteln,
- Mittelbares Lokalisieren des mobilen Geräts durch eine Auswertung einer durch die Fahrzeug-Kommunikation empfangenen, mittelbaren Geräteinformation, wobei vorzugsweise die mittelbare Geräteinformation für den Standort des mobilen Geräts relativ zu dem wenigstens einen weiteren Fahrzeug spezifisch ist,
- Vergleichen der empfangenen, mittelbaren Geräteinformation mit der unmittelbaren Geräteinformation, um die Lokalisierung durchzuführen, vorzugsweise um die Genauigkeit der Lokalisierung zu erhöhen und/oder den Standort zu plausibilisieren,
- Durchführen einer Entfernungsmessung einer Entfernung des mobilen Geräts und/oder des weiteren Fahrzeuges relativ zum Fahrzeug,
- Durchführen einer Richtungserfassung einer Richtung des mobilen Geräts und/oder des weiteren Fahrzeuges relativ zum Fahrzeug,
- Auswerten eines Kommunikationssignals der Fahrzeug-Kommunikation und/oder der Geräte-Kommunikation zur Entfernungsmessung, bevorzugt durch eine Signalauswertung, besonders bevorzugt Messung einer Signallaufzeit und/oder einer Signalstärke,
- Auswerten eines Kommunikationssignals der Fahrzeug-Kommunikation und/oder der Geräte-Kommunikation zur Richtungserfassung, bevorzugt durch eine Empfangswinkelbestimmung, insbesondere durch eine positionsspezifische Auswertung verschiedener Signalstärken bei verschiedenen Sende-Empfangseinheiten des Fahrzeuges.

Damit kann die Lokalisierung durch das Fahrzeug durch die Nutzung der Fahrzeug-Kommunikation verbessert werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Draufsicht auf ein Fahrzeug mit einem erfindungsgemäßen Sicherheitssystem mit einer Sende-Empfangseinheit,
- Fig. 2: eine weitere schematische Draufsicht auf ein Fahrzeug mit einem erfindungsgemäßen Sicherheitssystem mit zwei Sende-Empfangseinheiten,
- Fig. 3: eine weitere schematische Draufsicht auf ein Fahrzeug mit einem erfindungsgemäßen Sicherheitssystem mit mehr als zwei Sende-Empfangseinheiten,
- Fig. 4: eine weitere schematische Draufsicht auf ein Fahrzeug mit einem erfindungsgemäßen Sicherheitssystem zur Veranschaulichung einer Störung der Kommunikation,
- Fig. 5-7: weitere schematische Draufsichten auf ein Fahrzeug mit einem erfindungsgemäßen Sicherheitssystem und weiteren Fahrzeugen zur Veranschaulichung einer vernetzten Kommunikation,

In den nachfolgenden Figuren werden für die gleichen technischen Merkmale auch von unterschiedlichen Ausführungsbeispielen die identischen Bezugszeichen verwendet.

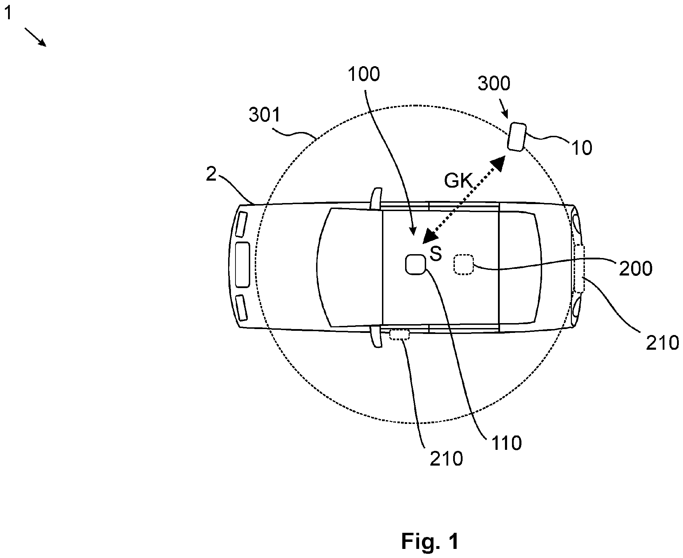

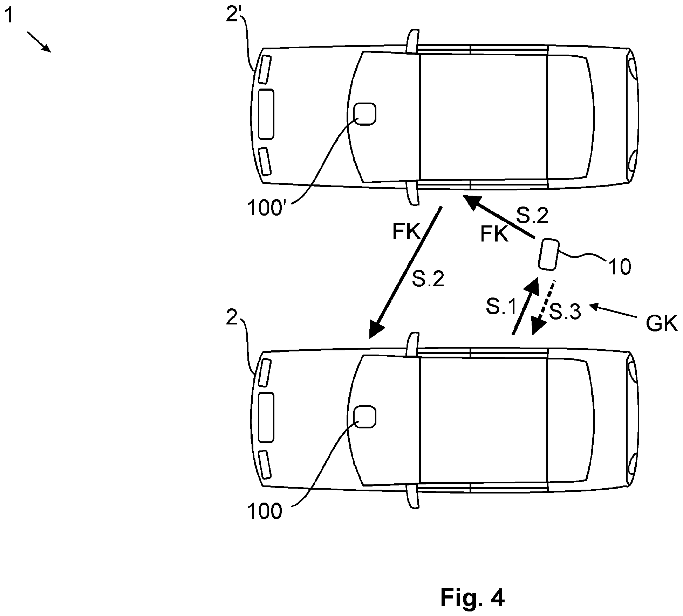

In den Figuren 1 bis 7 ist eine Draufsicht auf ein Fahrzeug 2 - dem Masterfahrzeug - gezeigt, welches ein erfindungsgemäßes Sicherheitssystem 1 aufweist. Entsprechend ist das Sicherheitssystem 1 zur Integration in das Fahrzeug 2 geeignet, um eine Lokalisierung eines mobilen Geräts 10 in einer Umgebung des Fahrzeuges 2 vorzunehmen. Hierzu umfasst das Sicherheitssystem 1 eine Sende-Empfangsanordnung 100, um eine Fahrzeug-Kommunikation FK des Fahrzeuges 2 mit wenigstens einem weiteren Fahrzeug 2' - dem Slave-Fahrzeug - in der Umgebung bereitzustellen. Diese Möglichkeit zur Fahrzeug-Kommunikation FK ist in den Figuren 4 bis 7 gezeigt. Des Weiteren umfasst das Sicherheitssystem 1 eine Verarbeitungsanordnung 200, um die Lokalisierung des mobilen Geräts 10 zumindest teilweise anhand der Fahrzeug-Kommunikation FK durchzuführen.

Wie in den Figuren 1 bis 3 veranschaulicht ist, kann die Sende-Empfangsanordnung 100 auch für eine unmittelbare Geräte-Kommunikation GK des Fahrzeuges 2 mit dem mobilen Gerät 10 ausgeführt sein, wobei die Verarbeitungsanordnung 200 in Datenverbindung mit der Sende-Empfangsanordnung 100 steht, um das mobile Gerät 10 anhand der Geräte-Kommunikation GK unmittelbar zu lokalisieren, und ggf. auch um anhand der Fahrzeug-Kommunikation FK zumindest eine der nachfolgenden Funktionen zur Lokalisierung durchzuführen:
- Plausibilisieren der unmittelbaren Lokalisierung,
- Ergänzen und/oder Korrigieren der unmittelbaren Lokalisierung, um eine Genauigkeit der Lokalisierung zu erhöhen,
- Mittelbares Lokalisieren des mobilen Geräts 10 über das wenigstens eine weitere Fahrzeug 2'.

Wenn, wie in Figur 1 gezeigt ist, die Sende-Empfangsanordnung 100 nur eine einzige Sende-Empfangseinheit 110 (Satellit) aufweist, kann die Lokalisierung des mobilen Geräts 10 verhältnismäßig ungenau sein. Durch Lokalisierung des mobilen Geräts 10 unmittelbar anhand der Geräte-Kommunikation GK kann dann die Information ermittelt werden, dass sich das mobile Gerät 10 in einem bestimmten Abstand zum Fahrzeug 2 befindet. Da jedoch keine Richtungsinformation ermittelt wird, liefert die Lokalisierung eine Vielzahl möglicher Standorte 301 des mobilen Geräts 10. Der ermittelte Abstand ist durch einen gestrichelten Kreis visualisiert, welcher die möglichen Standorte 301 des mobilen Geräts 10 darstellt. Es handelt sich bei der gestrichelten Linie z. B. um eine Äquipotentiallinie, welche eine bestimmte Signalstärke der Geräte-Kommunikation GK repräsentiert. Die Signalstärke eines Kommunikationssignal S der Geräte-Kommunikation GK ist mithin abhängig vom Abstand des mobilen Geräts 10 zur Sende-Empfangseinheit 110.

Die Information über den Abstand kann ggf. schon ausreichen, um eine Authentifizierung des mobilen Geräts 10 abzusichern. Um jedoch den genauen Standort 300 des mobilen Geräts 10 zu ermitteln, oder um den ermittelten Abstand zu plausibilisieren, kann erfindungsgemäß zusätzlich die Fahrzeug-Kommunikation FK zur Lokalisierung genutzt werden. Auf diese Weise kann die Absicherung der Authentifizierung weiter verbessert werden.

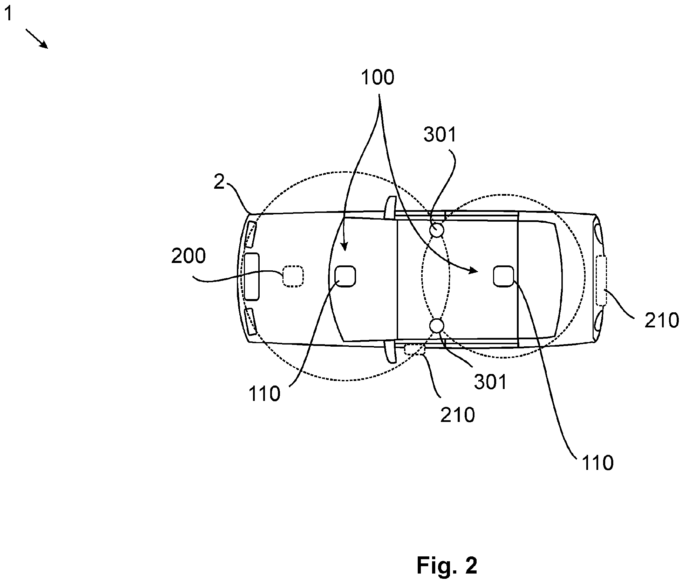

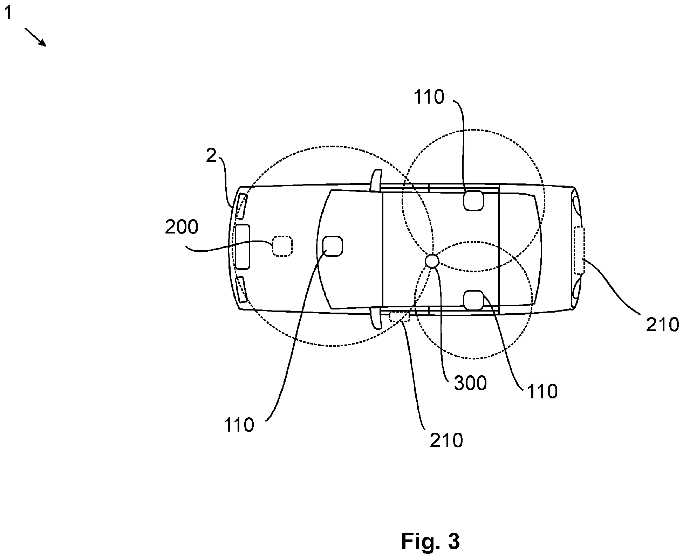

Anhand Figur 2 und 3 soll das Prinzip weiter verdeutlicht werden, in welcher Weise die Nutzung weiterer Sende-Empfangseinheiten 110 (des Master-Fahrzeuges 2, alternativ oder zusätzlich aber auch weiterer Sende-Empfangsanordnungen 100' der Slave-Fahrzeuge 2', dann bereitgestellt durch die Fahrzeug-Kommunikation FK) die Lokalisierung verbessern kann. So kann bei der Nutzung von zwei Sende-Empfangseinheiten 110 gemäß Figur 2 der mögliche Standort 301 des mobilen Geräts 10 bereits deutlich eingegrenzt werden. Die Nutzung von mindestens drei Sende-Empfangseinheiten 110 in Figur 3 kann sogar die exakte Position 300 des mobilen Geräts 10 liefern. Hierzu ist es erforderlich, dass die Lokalisierungen durch die einzelnen Sende-Empfangseinheiten 110 (z. B. die Informationen über die jeweilige Signalstärke) miteinander verglichen werden, z. B. durch die Verarbeitungsanordnung 200. Funktional lässt sich die exakte Position 300 des mobilen Geräts 10, wie bereits erwähnt, auch dadurch ermitteln, dass Lokalisierungsinformationen über weitere Lokalisierungen des mobilen Geräts 10 durch weitere Fahrzeuge 2' über die Fahrzeug-Kommunikation FK an das Master-Fahrzeug 2 übertragen werden, und dort wie die Lokalisierungen durch die einzelnen Sende-Empfangseinheiten 110 miteinander verglichen werden.

Des Weiteren kann es möglich sein, wie in den Figuren 1 bis 3 gezeigt ist, dass das Fahrzeug 2 (Master-Fahrzeug) eine Überwachungsanordnung 210 aufweist, um einen Zugangswunsch zu detektieren. Dabei kann die Überwachungsanordnung 210 z. B. einen Annäherungssensor, wie einen kapazitiven Sensor, aufweisen. Dieser ist bspw. im Bereich der Heckklappe (z. B. im Stoßfänger) oder im Türgriff angeordnet, um die Annäherung eines Benutzers zu detektieren. Diese Annäherung wird dann als Zugangswunsch interpretiert, um die sicherheitsrelevante Funktion zu initiieren.

In Figur 4 ist dargestellt, dass die Detektion des Zugangswunsches die Authentifizierung initiieren kann, vorteilhafterweise durch das Aussenden eines Anfragesignals S.1, insbesondere Wecksignals S.1, an das mobile Gerät 10. In diesem Falle kann das mobile Gerät 10 als ID-Geber fungieren, indem es bei Empfang des Anfragesignals S.1 ein Antwortsignal S.2 aussenden. Dieses Antwortsignal S.2 kann grundsätzlich über die Geräte-Kommunikation GK unmittelbar - also direkt - von dem Fahrzeug 2 empfangen werden (als Geräteantwort) und/oder durch wenigstens ein weiteres Fahrzeug 2' empfangen werden (ebenfalls als Geräteantwort). Diese Geräteantwort kann eine Authentifizierungsinformation umfassen, wie einen Code oder dergleichen.

Jedoch kann es möglich sein, dass die weiteren Fahrzeuge 2', z. B. fahrende und parkende Fahrzeuge 2', die Geräte-Kommunikation GK stören. In diesem Fall wird das Antwortsignal S.2 als ein gestörtes Signal S.3 an das Fahrzeug 2 übertragen. Um dennoch die Authentifizierung und/oder Lokalisierung des mobilen Geräts 10 durchzuführen, kann auch eines der weiteren Fahrzeuge 2' in der Umgebung das Antwortsignal S.2 empfangen. Dieses kann über die Fahrzeug-Kommunikation FK an das Fahrzeug 2 weitergeleitet werden.

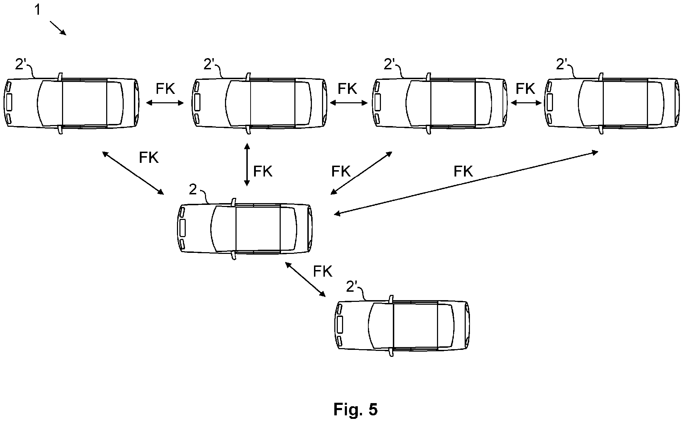

Dieses Prinzip kann gemäß Figur 5 dadurch erweitert werden, dass die Fahrzeug-Kommunikation FK nicht nur zwischen einem weiteren Fahrzeug 2' und dem Fahrzeug 2 durchgeführt wird, sondern dass eine vernetzte Übertragung zwischen mehreren Fahrzeugen 2' erfolgt. Jedes der Fahrzeuge 2, 2' kann dabei ein Abbild seiner Umgebung erfassen, indem es die Fahrzeug-Kommunikation FK mit den weiteren Fahrzeugen auswertet. So kann jedes der Fahrzeuge 2, 2' auch seine benachbarten Fahrzeuge 2, 2' über die Fahrzeug-Kommunikation FK lokalisieren (z. B. über die Signalstärke oder eine ToF-Analyse). Da bei geparkten Fahrzeuge 2, 2' keine Veränderung der Position auftritt, kann bei diesen auf eine Mittelung mehrerer Lokalisierungen erfolgen, um die Genauigkeit zu verbessern. Auch ist es möglich, dass bei jedem Fahrzeug der Winkel bzw. die Richtung bei der Lokalisierung bestimmt wird, wenn das Fahrzeug mehr als eine Sende-Empfangseinheit 110 aufweist.

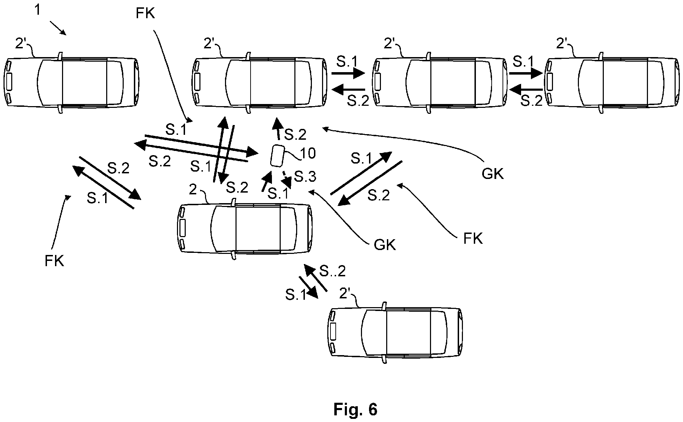

Die vernetzte Übertragung kann gemäß Figur 6 eine Übertragung des Antwortsignals S.2 umfassen, alternativ oder zusätzlich aber auch die Übertragung einer Geräteinformation über wenigstens eine weitere Lokalisierung des mobilen Geräts 10 durch das wenigstens eine weitere Fahrzeug 2'. Durch die Übertragung des Antwortsignals S.2 kann das Fahrzeug 2 dieses Antwortsignal S.2 auch dann erfassen, wenn es eigentlich sich außerhalb der Kommunikationsreichweite des mobilen Geräts 10 befindet. Somit bieten die weiteren Fahrzeuge 2' eine Verlängerung der Signalübertragung.

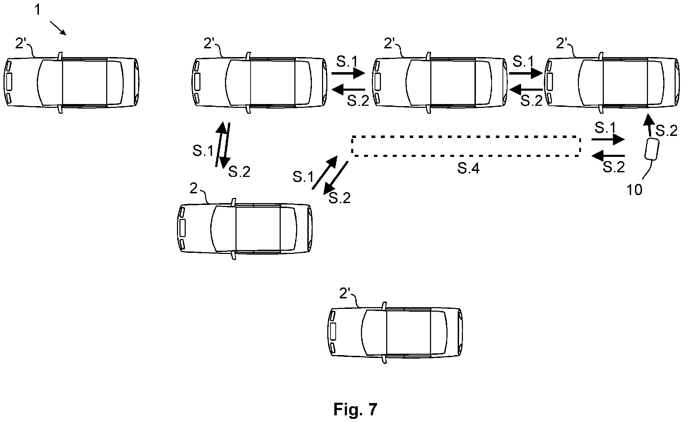

In Figur 7 ist gezeigt, dass die vernetzte Übertragung auch ein Absichern der Authentifizierung durch das Fahrzeug 2 ermöglichen kann. Insbesondere durch eine Relay-Station-Attack kann versucht werden, mittels der RSA-Verlängerung S.4 das Antwortsignal S.2 vom mobilen Gerät 10 an das Fahrzeug 2 auch über Abstände zu übermitteln, welche eigentlich für die Authentifizierung nicht vorgesehen sind. Die Lokalisierung über die Fahrzeug-Kommunikation FK kann dies verhindern, da der Abstand zum Fahrzeug 2 auf diese Weise sehr zuverlässig ermittelt werden kann.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Sicherheitssystem
- 2: Fahrzeug, Master-Fahrzeug

- 10: mobiles Gerät, Identifikationsgeber, Mobilfunkgerät

- 2': weiteres Fahrzeug, Slave-Fahrzeug

- 100: Sende-Empfangsanordnung
- 110: Sende-Empfangseinheit, Bluetooth-Schnittstelle

- 200: Verarbeitungsanordnung
- 210: Überwachungsanordnung

- 300: Standort des mobilen Geräts
- 301: mögliche Standorte des mobilen Geräts

- 100': weitere Sende-Empfangsanordnung
- FK: Fahrzeug-Kommunikation
- GK: Geräte-Kommunikation
- S: Kommunikationssignal
- S.1: Anfragesignal, Wecksignal
- S.2: Antwortsignal
- S.3: gestörtes Signal
- S.4: RSA-Verlängerung

## Patentansprüche

1. Sicherheitssystem (1) für ein Fahrzeug (2), zur Lokalisierung und Authentifizierung eines mobilen Geräts (10) in einer Umgebung des Fahrzeuges (2), aufweisend:
- das mobile Gerät (10),
- eine Sende-Empfangsanordnung (100), um eine Fahrzeug-Kommunikation (FK) des Fahrzeuges (2) mit wenigstens einem weiteren Fahrzeug (2') in der Umgebung bereitzustellen,
- eine Verarbeitungsanordnung (200), um die Lokalisierung des mobilen Geräts (10) zumindest teilweise anhand der Fahrzeug-Kommunikation (FK) durchzuführen,
wobei das Sicherheitssystem (1) dazu ausgeführt ist, die Authentifizierung durch eine Kommunikation der Sende-Empfangsanordnung (100) mit dem mobilen Gerät (10) durchzuführen, wobei die Lokalisierung des mobilen Geräts (10) die Authentifizierung absichert,
wobei das mobile Gerät (10) als ein Mobilfunkgerät (10) oder als ein für das Fahrzeug (2) spezifischer mobiler Identifikationsgeber (10) ausgebildet ist, und zur Bereitstellung der Authentifizierung am Fahrzeug (2) zur Freigabe und/oder Auslösung einer sicherheitsrelevanten Fahrzeugfunktion ausgebildet ist.

2. Sicherheitssystem (1) nach Anspruch 1,
**dadurch gekennzeichnet,**
**dass** die Sende-Empfangsanordnung (100) auch für eine unmittelbare Geräte-Kommunikation (GK) des Fahrzeuges (2) mit dem mobilen Gerät (10) ausgeführt ist, wobei die Verarbeitungsanordnung (200) in Datenverbindung mit der Sende-Empfangsanordnung (100) steht, um das mobile Gerät (10) anhand der Geräte-Kommunikation (GK) unmittelbar zu lokalisieren, und um anhand der Fahrzeug-Kommunikation (FK) zumindest eine der nachfolgenden Funktionen zur Lokalisierung durchzuführen:
- Plausibilisieren der unmittelbaren Lokalisierung,
- Ergänzen und/oder Korrigieren der unmittelbaren Lokalisierung, um eine Genauigkeit der Lokalisierung zu erhöhen,
- Mittelbares Lokalisieren des mobilen Geräts (10) über das wenigstens eine weitere Fahrzeug (2').

3. Sicherheitssystem (1) nach Anspruch 1 oder 2,
**dadurch gekennzeichnet,**
**dass** die Sende-Empfangsanordnung (100) wenigstens eine Sende-Empfangseinheit (110) aufweist, welche als eine Funk-, bevorzugt als eine HF- oder LF- oder NFC- oder UWB- oder WLAN- oder Bluetooth-, besonders bevorzugt als eine Bluetooth-Low-Energy-Schnittstelle, ausgebildet ist, um die Fahrzeug-Kommunikation (FK), insbesondere vernetzt mit einer Mehrzahl verschiedener weiterer Fahrzeuge (2'), bereitzustellen.

4. Sicherheitssystem (1) nach einem der vorhergehenden Ansprüche,
**dadurch gekennzeichnet,**
**dass** die Sende-Empfangsanordnung (100) dazu ausgeführt ist, über die Fahrzeug-Kommunikation (FK) eine Geräteinformation über wenigstens eine weitere Lokalisierung des mobilen Geräts (10) durch das wenigstens eine weitere Fahrzeug (2') zu empfangen, und
die Verarbeitungsanordnung (200) dazu ausgeführt ist, zur Lokalisierung des mobilen Geräts (10) eine Fahrzeug-Lokalisierung des wenigstens einen weiteren Fahrzeuges (2') durchzuführen, um die Geräteinformation mit einem Ergebnis der Fahrzeug-Lokalisierung zu vergleichen, um selbst die Lokalisierung des mobilen Geräts (10) mittelbar anhand der Geräteinformation durchzuführen.

5. Sicherheitssystem (1) nach einem der vorhergehenden Ansprüche,
**dadurch gekennzeichnet,**
**dass** die Verarbeitungsanordnung (200) dazu ausgeführt ist, zur Lokalisierung des mobilen Geräts (10) und/oder zur Fahrzeug-Lokalisierung des wenigstens einen weiteren Fahrzeuges (2') eine Auswertung der Fahrzeug-Kommunikation (FK) und/oder einer Geräte-Kommunikation (GK) durchzuführen, wobei die Auswertung wenigstens eine der nachfolgenden Erfassungen bereitstellt:
- eine Entfernungsmessung einer Entfernung des mobilen Geräts (10) und/oder des weiteren Fahrzeuges (2') relativ zum Fahrzeug (2),
- eine Richtungserfassung einer Richtung des mobilen Geräts (10) und/oder des weiteren Fahrzeuges (2') relativ zum Fahrzeug (2),
wobei vorzugsweise die Auswertung hierzu eine Signalauswertung, bevorzugt Messung einer Signallaufzeit und/oder einer Signalstärke, und/oder eine Empfangswinkelbestimmung eines durch die Fahrzeug-Kommunikation (FK) und/oder durch die Geräte-Kommunikation (GK) empfangenen Kommunikationssignals (S) bereitstellt.

6. Sicherheitssystem (1) nach einem der vorhergehenden Ansprüche,
**dadurch gekennzeichnet,**
**dass** die Verarbeitungsanordnung (200) dazu ausgeführt ist, die Fahrzeug-Kommunikation (FK) und/oder eine Geräte-Kommunikation (GK) wenigstens einer Sende-Empfangseinheit (110) der Sende-Empfangsanordnung (100) in Abhängigkeit von einer Position der jeweiligen Sende-Empfangseinheit (110) und damit positionsspezifisch auszuwerten, vorzugsweise durch eine Auswertung der Signalstärke bei der jeweiligen Sende-Empfangseinheit (110) und/oder durch einen Vergleich verschiedener Signalstärken bei unterschiedlichen Sende-Empfangseinheiten (110), insbesondere um eine Empfangswinkelbestimmung eines Kommunikationssignals (S) der jeweiligen Fahrzeug- und/oder Geräte-Kommunikation (FK, GK) durchzuführen.

7. Sicherheitssystem (1) nach einem der vorhergehenden Ansprüche,
**dadurch gekennzeichnet,**
**dass** die Sende-Empfangsanordnung (100) dazu ausgeführt ist, ein Netzwerk, vorzugsweise Bluetooth-Netzwerk, mit dem Fahrzeug (2) und dem wenigstens einem weiteren Fahrzeug (2') jeweils als Teilnehmer (2,2') des Netzwerkes bereitzustellen, bei welchem die Sende-Empfangsanordnung (100) des Fahrzeuges (2) als ein Master (2) des Netzwerkes ausgeführt ist, um die Kommunikation des Netzwerkes für die weiteren Teilnehmer (2') zu steuern.

8. Sicherheitssystem (1) nach einem der vorhergehenden Ansprüche,
**dadurch gekennzeichnet,**
**dass** das mobile Gerät (10), welches ein Teil des Sicherheitssystems (1) ist, und als ein Mobilfunkgerät (10), insbesondere Smartphone, oder als ein für das Fahrzeug (2) spezifischer mobiler Identifikationsgeber (10) ausgebildet ist, zur Bereitstellung einer Authentifizierung am Fahrzeug (2) zur Freigabe und/oder Auslösung einer sicherheitsrelevanten Fahrzeugfunktion ausgebildet ist, durch die Aussendung einer Geräteantwort über ein Kommunikationssignal (S) der Geräte-Kommunikation (GK).

9. Fahrzeug (2), aufweisend ein Sicherheitssystem (1) nach einem der vorhergehenden Ansprüche, zur Lokalisierung und Authentifizierung eines mobilen Geräts (10) in einer Umgebung des Fahrzeuges (2).

10. Fahrzeug nach Anspruch 9,
**dadurch gekennzeichnet,**
**dass** die Sende-Empfangsanordnung (100) am Fahrzeug (2) angeordnet, insbesondere fest mit dem Fahrzeug (2) verbunden ist, und vorzugsweise mehrere Sende-Empfangseinheiten (110) der Sende-Empfangsanordnung (100) an unterschiedlichen Positionen am Fahrzeug (2) angeordnet sind, um jeweils die Fahrzeug-Kommunikation (FK) und/oder eine Geräte-Kommunikation (GK) positionsspezifisch bereitzustellen.

11. Verfahren zur Lokalisierung und Authentifizierung eines mobilen Geräts (10) durch ein Fahrzeug (2) in einer Umgebung des Fahrzeuges (2),
**wobei die nachfolgenden Schritte durchgeführt werden:**
a) Bereitstellen einer Fahrzeug-Kommunikation (FK) des Fahrzeuges (2) mit wenigstens einem weiteren Fahrzeug (2') in der Umgebung,
b) Durchführen der Lokalisierung des mobilen Geräts (10) zumindest teilweise anhand der Fahrzeug-Kommunikation (FK),
c) Authentifizieren des mobilen Geräts (10), durch eine Kommunikation der Sende-Empfangsvorrichtung (100) mit dem mobilen Gerät (10) zur Freigabe und/oder Auslösung einer sicherheitsrelevanten Fahrzeugfunktion, wobei die Lokalisierung des mobilen Geräts (10) die Authentifizierung absichert,
wobei das Verfahren durch ein Sicherheitssystem (1) nach einem der Ansprüche 1 bis 8 durchgeführt wird, wobei Schritt a) durch die Sende-Empfangsanordnung (100) und Schritt b) durch die Verarbeitungsanordnung (200) des Sicherheitssystems (1) durchgeführt werden.

12. Verfahren nach einem der vorhergehenden Ansprüche,
**dadurch gekennzeichnet,**
**dass** Schritt a) wenigstens einen der nachfolgenden Schritte umfasst:
- Empfangen wenigstens einer Geräteinformation über einen Standort (300) des mobilen Geräts (10) relativ zu dem wenigstens einen weiteren Fahrzeug (2'), ermittelt durch das wenigstens eine weitere Fahrzeug (2') mittels wenigstens einer weiteren Lokalisierung des mobilen Geräts (10),
- Empfangen einer Geräteinformation über einen Standort (300) des mobilen Geräts (10) relativ zu einem der weiteren Fahrzeuge (2'), ermittelt durch das eine weitere Fahrzeug (2') mittels einer weiteren Lokalisierung des mobilen Geräts (10), und weitervermittelt über wenigstens ein anderes der weiteren Fahrzeuge (2),
- Empfangen einer Geräteantwort mit Authentifizierungsinformationen des mobilen Geräts (10), welche unmittelbar durch das oder eines der weiteren Fahrzeuge (2') vom mobilen Gerät (10) empfangen ist, und optional über wenigstens ein anderes der weiteren Fahrzeuge (2') über eine weitere Fahrzeug-Kommunikation weitervermittelt ist,
- Aussenden eines Wecksignals an das mobile Gerät (10), um eine Aussendung der Geräteantwort durch das mobile Gerät (10) an das wenigstens eine weitere Fahrzeug (2') zu initiieren,
wobei das Empfangen jeweils über die Fahrzeug-Kommunikation (FK) erfolgt.

13. Verfahren nach einem der vorhergehenden Ansprüche,
**dadurch gekennzeichnet,**
**dass** das Fahrzeug (2) in der Form eines Master-Fahrzeuges (2) ein Netzwerk mit den weiteren Fahrzeugen (2') jeweils als Slave-Fahrzeuge (2') erzeugt, in welchem durch wenigstens eines der Slave-Fahrzeuge (2'):
- eine Geräteinformation über einen Standort (300) des mobilen Geräts (10) ermittelt wird, und/oder
- eine Geräteantwort des mobilen Geräts (10) empfangen wird,
und jeweils untereinander weitervermittelt werden, um die Geräteinformation und/oder Geräteantwort an das Master-Fahrzeug (2) über die Fahrzeug-Kommunikation (FK) zu übertragen, um somit die Reichweite des Master-Fahrzeuges (2) für Lokalisierung des mobilen Geräts (10) und/oder das Empfangen der Geräteantwort zu erhöhen.

14. Verfahren nach einem der vorhergehenden Ansprüche,
**dadurch gekennzeichnet,**
**dass** Schritt b) wenigstens einen der nachfolgenden Schritte umfasst:
- Unmittelbares Lokalisieren des mobilen Geräts (10) durch das Fahrzeug (2), um eine unmittelbare Geräteinformation über einen Standort (300) des mobilen Geräts (10) relativ zum Fahrzeug (2) zu ermitteln,
- Mittelbares Lokalisieren des mobilen Geräts (10) durch eine Auswertung einer durch die Fahrzeug-Kommunikation (FK) empfangenen, mittelbaren Geräteinformation, wobei vorzugsweise die mittelbare Geräteinformation für den Standort (300) des mobilen Geräts (10) relativ zu dem wenigstens einen weiteren Fahrzeug (2') spezifisch ist,
- Vergleichen der empfangenen, mittelbaren Geräteinformation mit der unmittelbaren Geräteinformation, um die Lokalisierung durchzuführen, vorzugsweise um die Genauigkeit der Lokalisierung zu erhöhen und/oder den Standort (300) zu plausibilisieren,
- Durchführen einer Entfernungsmessung einer Entfernung des mobilen Geräts (10) und/oder des weiteren Fahrzeuges (2') relativ zum Fahrzeug (2),
- Durchführen einer Richtungserfassung einer Richtung des mobilen Geräts (10) und/oder des weiteren Fahrzeuges (2') relativ zum Fahrzeug (2),
- Auswerten eines Kommunikationssignals (S) der Fahrzeug-Kommunikation (FK) und/oder der Geräte-Kommunikation (GK) zur Entfernungsmessung, bevorzugt durch eine Signalauswertung, bevorzugt Messung einer Signallaufzeit und/oder einer Signalstärke,
- Auswerten eines Kommunikationssignals (S) der Fahrzeug-Kommunikation (FK) und/oder der Geräte-Kommunikation (GK) zur Richtungserfassung, bevorzugt durch eine Empfangswinkelbestimmung, insbesondere durch eine positionsspezifische Auswertung verschiedener Signalstärken bei verschiedenen Sende-Empfangseinheiten (110) des Fahrzeuges (2).

## Claims

1. Security system (1) for a vehicle (2), for localizing and authenticating a mobile device (10) in an environment of the vehicle (2), comprising:
- the mobile device (10),
- a transceiver arrangement (100) for providing vehicle communication (FK) of the vehicle (2) with at least one other vehicle (2') in the environment,
- a processing arrangement (200) for performing the localization of the mobile device (10) at least partially on the basis of the vehicle communication (FK),
wherein the security system (1) is designed to perform the authentication by communication of the transceiver arrangement (100) with the mobile device (10), wherein the localization of the mobile device (10) secures the authentication,
wherein the mobile device (10) is designed as a mobile radio device (10) or as a mobile identification transmitter (10) specific to the vehicle (2), and is designed to provide authentication on the vehicle (2) for enabling and/or triggering a safety-relevant vehicle function.

2. Security system (1) according to claim 1,
**characterized in that**
the transceiver arrangement (100) is also designed for direct device communication (GK) of the vehicle (2) with the mobile device (10), the processing arrangement (200) being in data connection with the transceiver arrangement (100) in order to localize the mobile device (10) directly on the basis of the device communication (GK), and in order to perform at least one of the following functions for localization on the basis of the vehicle communication (FK):
- Plausibility check of the immediate localization,
- Supplement and/or correct the immediate localization in order to increase the accuracy of the localization,
- Localization of the mobile device (10) via the at least one other vehicle (2').

3. Security system (1) according to claim 1 or 2,
**characterized in that**
the transceiver arrangement (100) has at least one transceiver unit (110) which is designed as a radio interface, preferably as an HF or LF or NFC or UWB or WLAN or Bluetooth, particularly preferably as a Bluetooth low-energy interface, in order to provide the vehicle communication (FK), in particular networked with a plurality of different other vehicles (2').

4. Security system (1) according to any one of the preceding claims,
**characterized in that**
the transceiver arrangement (100) is designed to receive device information about at least one further localization of the mobile device (10) by the at least one further vehicle (2') via the vehicle communication (FK), and
the processing arrangement (200) is designed to carry out a vehicle localization of the at least one further vehicle (2') in order to localize the mobile device (10), in order to compare the device information with a result of the vehicle localization, in order to carry out the localization of the mobile device (10) itself indirectly on the basis of the device information.

5. Security system (1) according to any one of the preceding claims,
**characterized in that**
the processing arrangement (200) is designed to carry out an evaluation of the vehicle communication (FK) and/or a device communication (GK) for localizing the mobile device (10) and/or for vehicle localization of the at least one further vehicle (2'), the evaluation providing at least one of the following detections:
- a distance measurement of a distance of the mobile device (10) and/or the further vehicle (2') relative to the vehicle (2),
- a direction detection of a direction of the mobile device (10) and/or the further vehicle (2') relative to the vehicle (2),
wherein the evaluation preferably provides a signal evaluation, preferably measurement of a signal propagation time and/or a signal strength, and/or a reception angle determination of a communication signal (S) received by the vehicle communication (FK) and/or by the device communication (GK).

6. Security system (1) according to any one of the preceding claims,
**characterized in that**
the processing arrangement (200) is designed to evaluate the vehicle communication (FK) and/or a device communication (GK) of at least one transceiver unit (110) of the transceiver arrangement (100) as a function of a position of the respective transceiver unit (110) and thus in a position-specific manner, preferably by evaluating the signal strength at the respective transceiver unit (110) and/or by comparing different signal strengths at different transceiver units (110), in particular in order to perform a reception angle determination of a communication signal (S) of the respective vehicle and/or device communication (FK, GK).

7. Security system (1) according to any one of the preceding claims,
**characterized in that**
the transceiver arrangement (100) is designed to provide a network, preferably a Bluetooth network, with the vehicle (2) and the at least one further vehicle (2') in each case as subscribers (2, 2') of the network, in which the transceiver arrangement (100) of the vehicle (2) is designed as a master (2) of the network in order to control the communication of the network for the further subscribers (2').

8. Security system (1) according to any one of the preceding claims,
**characterized in that**
the mobile device (10), which is part of the security system (1) and is designed as a mobile radio device (10), in particular a smartphone, or as a mobile identification transmitter (10) specific to the vehicle (2), is designed to provide authentication on the vehicle (2) for enabling and/or triggering a security-relevant vehicle function by transmitting a device response via a communication signal (S) of the device communication (GK).

9. Vehicle (2), comprising a security system (1) according to one of the preceding claims, for localizing and authenticating a mobile device (10) in an environment of the vehicle (2).

10. Vehicle according to claim 9,
**characterized in that**
the transceiver arrangement (100) is arranged on the vehicle (2), in particular is permanently connected to the vehicle (2), and preferably a plurality of transceiver units (110) of the transceiver arrangement (100) are arranged at different positions on the vehicle (2) in order to provide the vehicle communication (FK) and/or a device communication (GK) in a position-specific manner in each case.

11. Method for localization and authentication of a mobile device (10) by a vehicle (2) in an environment of the vehicle (2),
**wherein the following steps are carried out:**
a) Provision of vehicle communication (FK) of the vehicle (2) with at least one other vehicle (2') in the environment,
b) Performing the localization of the mobile device (10) at least partially based on the vehicle communication (FK),
c) Authenticating the mobile device (10) by means of communication between the transceiver arrangement (100) and the mobile device (10) for enabling and/or triggering a safety-relevant vehicle function, with the localization of the mobile device (10) safeguarding the authentication,
wherein the method is performed by a security system (1) according to any one of claims 1 to 8, wherein step a) is performed by the transceiver arrangement (100) and step b) is performed by the processing arrangement (200) of the security system (1).

12. Method according to any one of the preceding claims,
**characterized in that**
step a) comprises at least one of the following steps:
- Receiving at least one piece of device information about a location (300) of the mobile device (10) relative to the at least one further vehicle (2'), determined by the at least one further vehicle (2') by means of at least one further localization of the mobile device (10),
- Receiving device information about a location (300) of the mobile device (10) relative to one of the further vehicles (2'), determined by the one further vehicle (2') by means of a further localization of the mobile device (10), and further transmitted via at least one other of the further vehicles (2),
- Receiving a device response with authentication information of the mobile device (10), which is received directly by the or one of the further vehicles (2') from the mobile device (10), and is optionally further transmitted via at least one other of the further vehicles (2') via a further vehicle communication,
- Transmission of a wake-up signal to the mobile device (10) in order to initiate transmission of the device response by the mobile device (10) to the at least one further vehicle (2'),
whereby the reception takes place via the vehicle communication (FK).

13. Method according to any one of the preceding claims,
**characterized in that**
the vehicle (2) in the form of a master vehicle (2) generates a network with the other vehicles (2') each as slave vehicles (2'), in which by at least one of the slave vehicles (2'):
- device information about a location (300) of the mobile device (10) is determined, and/or
- a device response from the mobile device (10) is received,
and is forwarded to each other in order to transmit the device information and/or device response to the master vehicle (2) via the vehicle communication (FK) in order to increase the range of the master vehicle (2) for localizing the mobile device (10) and/or receiving the device response.

14. Method according to any one of the preceding claims,
**characterized in that**
step b) comprises at least one of the following steps:
- Immediate localization of the mobile device (10) by the vehicle (2) to determine immediate device information about a location (300) of the mobile device (10) relative to the vehicle (2),
- Indirect localization of the mobile device (10) by evaluating indirect device information received by the vehicle communication (FK), wherein preferably the indirect device information is specific to the location (300) of the mobile device (10) relative to the at least one further vehicle (2'),
- Comparing the received indirect device information with the direct device information to perform the localization, preferably to increase the accuracy of the localization and/or to check the plausibility of the location (300),
- Performing a distance measurement of a distance of the mobile device (10) and/or the further vehicle (2') relative to the vehicle (2),
- Performing a directional detection of a direction of the mobile device (10) and/or the further vehicle (2') relative to the vehicle (2),
- Evaluation of a communication signal (S) of the vehicle communication (FK) and/or the device communication (GK) for distance measurement, preferably by signal evaluation, preferably measurement of a signal propagation time and/or a signal strength,
- Evaluation of a communication signal (S) of the vehicle communication (FK) and/or the device communication (GK) for direction detection, preferably by determining the reception angle, in particular by a position-specific evaluation of different signal strengths at different transceiver units (110) of the vehicle (2).

## Revendications

1. Système de sécurité (1) pour un véhicule (2), pour la localisation et l'authentification d'un appareil mobile (10) dans un environnement du véhicule (2), comprenant :
- l'appareil mobile (10),
- un dispositif émetteur-récepteur (100) pour fournir une communication de véhicule (FK) du véhicule (2) avec au moins un autre véhicule (2') dans l'environnement,
- un dispositif de traitement (200) pour effectuer la localisation de l'appareil mobile (10) au moins en partie à l'aide de la communication de véhicule (FK),
dans lequel le système de sécurité (1) est adapté pour effectuer l'authentification par une communication du dispositif émetteur-récepteur (100) avec l'appareil mobile (10), la localisation de l'appareil mobile (10) sécurisant l'authentification,
l'appareil mobile (10) étant conçu comme un appareil de radiocommunication mobile (10) ou comme un transmetteur d'identification mobile (10) spécifique au véhicule (2), et étant conçu pour fournir l'authentification au véhicule (2) afin de libérer et/ou de déclencher une fonction du véhicule relative à la sécurité.

2. Système de sécurité (1) selon la revendication 1,
**caractérisé en ce que**
le dispositif émetteur-récepteur (100) est également réalisé pour une communication directe d'appareil (GK) du véhicule (2) avec l'appareil mobile (10), le dispositif de traitement (200) étant en liaison de données avec le dispositif émetteur-récepteur (100) pour localiser directement l'appareil mobile (10) à l'aide de la communication d'appareil (GK), et pour exécuter au moins l'une des fonctions suivantes de localisation à l'aide de la communication de véhicule (FK) :
- Vérifier la plausibilité de la localisation immédiate,
- Compléter et/ou corriger la localisation immédiate afin d'augmenter la précision de la localisation,
- Localiser de manière immédiatement l'appareil mobile (10) par l'intermédiaire du au moins un autre véhicule (2').

3. Système de sécurité (1) selon la revendication 1 ou 2,
**caractérisé en ce que**
le dispositif émetteur-récepteur (100) présente au moins une unité émetteur-récepteur (110) qui est conçue comme une interface radio, de préférence comme une interface HF ou LF ou NFC ou UWB ou WLAN ou Bluetooth, de préférence comme une interface Bluetooth à faible énergie, pour fournir la communication de véhicule (FK), en particulier en réseau avec une pluralité d'autres véhicules (2') différents.

4. Système de sécurité (1) selon l'une des revendications précédentes,
**caractérisé en ce que**
le dispositif émetteur-récepteur (100) est réalisé pour recevoir, par l'intermédiaire de la communication de véhicule (FK), une information d'appareil concernant au moins une autre localisation de l'appareil mobile (10) par l'au moins un autre véhicule (2'), et
le dispositif de traitement (200) est réalisé pour effectuer une localisation de véhicule de l'au moins un autre véhicule (2') pour localiser l'appareil mobile (10), pour comparer l'information d'appareil avec un résultat de la localisation de véhicule, pour effectuer elle-même la localisation de l'appareil mobile (10) indirectement à l'aide de l'information d'appareil.

5. Système de sécurité (1) selon l'une des revendications précédentes,
**caractérisé en ce que**
le dispositif de traitement (200) est réalisé pour effectuer une évaluation de la communication de véhicule (FK) et/ou d'une communication d'appareil (GK) pour localiser l'appareil mobile (10) et/ou pour localiser le véhicule de l'au moins un autre véhicule (2'), l'évaluation fournissant au moins une des détections suivantes :
- une mesure de distance d'une distance de l'appareil mobile (10) et/ou de l'autre véhicule (2') par rapport au véhicule (2),
- une détection de direction d'une direction de l'appareil mobile (10) et/ou de l'autre véhicule (2') par rapport au véhicule (2),
l'évaluation fournissant de préférence à cet effet une évaluation de signal, de préférence une mesure d'un temps de propagation de signal et/ou d'une intensité de signal, et/ou une détermination d'angle de réception d'un signal de communication (S) reçu par la communication de véhicule (FK) et/ou par la communication d'appareil (GK).

6. Système de sécurité (1) selon l'une des revendications précédentes,
**caractérisé en ce que**
le dispositif de traitement (200) est réalisé pour évaluer la communication de véhicule (FK) et/ou une communication d'appareil (GK) d'au moins une unité émetteur-récepteur (110) du dispositif émetteur-récepteur (100) en fonction d'une position de l'unité émetteur-récepteur (110) respective et donc de manière spécifique à la position, de préférence par une évaluation de l'intensité du signal dans l'unité émetteur-récepteur (110) respective et/ou par une comparaison de différentes intensités de signal dans différentes unités émettrices-réceptrices (110), notamment pour effectuer une détermination de l'angle de réception d'un signal de communication (S) de la communication (FK, GK) respective du véhicule et/ou de l'appareil.

7. Système de sécurité (1) selon l'une des revendications précédentes,
**caractérisé en ce que**
le dispositif émetteur-récepteur (100) est réalisé pour mettre à disposition un réseau, de préférence un réseau Bluetooth, avec le véhicule (2) et l'au moins un autre véhicule (2') respectivement en tant que participants (2, 2') du réseau, dans lequel le dispositif émetteur-récepteur (100) du véhicule (2) est réalisé en tant que maître (2) du réseau, afin de commander la communication du réseau pour les autres participants (2').

8. Système de sécurité (1) selon l'une des revendications précédentes,
**caractérisé en ce que**
l'appareil mobile (10), qui fait partie du système de sécurité (1) et est conçu comme un appareil de radiocommunication mobile (10), en particulier un smartphone, ou comme un transmetteur d'identification mobile (10) spécifique au véhicule (2), est conçu pour fournir une authentification au véhicule (2) afin de libérer et/ou de déclencher une fonction du véhicule relative à la sécurité, par l'émission d'une réponse de l'appareil via un signal de communication (S) de la communication de l'appareil (GK).

9. Véhicule (2), présentant un système de sécurité (1) selon l'une des revendications précédentes, pour la localisation et l'authentification d'un appareil mobile (10) dans un environnement du véhicule (2).

10. Véhicule selon la revendication 9,
**caractérisé en ce que**
le dispositif émetteur-récepteur (100) est disposé sur le véhicule (2), en particulier est relié fixement au véhicule (2), et de préférence plusieurs unités émettrices-réceptrices (110) du dispositif émetteur-récepteur (100) sont disposées à différentes positions sur le véhicule (2), afin de mettre à disposition respectivement la communication de véhicule (FK) et/ou une communication d'appareil (GK) spécifique à la position.

11. Procédé de localisation et d'authentification d'un appareil mobile (10) par un véhicule (2) dans un environnement du véhicule (2),
**dans lequel les étapes suivantes sont effectuer:**
a) fournir une communication de véhicule (FK) du véhicule (2) avec au moins un autre véhicule (2') dans l'environnement,
b) effectuer la localisation de l'appareil mobile (10) au moins en partie à l'aide de la communication du véhicule (FK),
c) l'authentification de l'appareil mobile (10), par une communication du dispositif émetteur-récepteur (100) avec l'appareil mobile (10) pour la libération et/ou le déclenchement d'une fonction du véhicule relative à la sécurité, la localisation de l'appareil mobile (10) garantissant l'authentification,
le procédé étant mis en œuvre par un système de sécurité (1) selon l'une quelconque des revendications 1 à 8, dans lequel l'étape a) est mise en œuvre par le dispositif émetteur-récepteur (100) et l'étape b) est mise en œuvre par le dispositif de traitement (200) du système de sécurité (1).

12. Procédé selon l'une quelconque des revendications précédentes,
**caractérisé en ce que**
l'étape a) comprend au moins une des étapes suivantes :
- La réception d'au moins une information d'appareil concernant une position (300) de l'appareil mobile (10) par rapport à l'au moins un autre véhicule (2'), déterminée par l'au moins un autre véhicule (2') au moyen d'au moins une autre localisation de l'appareil mobile (10),
- La réception d'une information d'appareil concernant une position (300) de l'appareil mobile (10) par rapport à l'un des autres véhicules (2'), déterminée par l'un des autres véhicules (2') au moyen d'une autre localisation de l'appareil mobile (10), et retransmise par au moins un autre des autres véhicules (2),
- La réception d'une réponse d'appareil avec des informations d'authentification de l'appareil mobile (10), qui est reçue directement par le ou l'un des autres véhicules (2') de l'appareil mobile (10), et qui est éventuellement retransmise par au moins un autre des autres véhicules (2') par une autre communication de véhicule,
- L'émission d'un signal de réveil vers l'appareil mobile (10) afin d'initier une émission de la réponse de l'appareil par l'appareil mobile (10) vers le au moins un autre véhicule (2'),
la réception s'effectuant à chaque fois via la communication de véhicule (FK).

13. Procédé selon l'une quelconque des revendications précédentes,
**caractérisé en ce que**
le véhicule (2) sous la forme d'un véhicule maître (2) génère un réseau avec les autres véhicules (2') respectivement comme véhicules esclaves (2'), dans lequel par au moins un des véhicules esclaves (2') :
- une information d'appareil concernant une position (300) de l'appareil mobile (10) est déterminée, et/ou
- une réponse de l'appareil mobile (10) est reçue,
et respectivement est retransmise entre elles pour transmettre l'information d'appareil et/ou la réponse d'appareil au véhicule maître (2) via la communication de véhicule (FK), afin d'augmenter ainsi la portée du véhicule maître (2) pour la localisation de l'appareil mobile (10) et/ou la réception de la réponse d'appareil.

14. Procédé selon l'une quelconque des revendications précédentes,
**caractérisé en ce que**
l'étape b) comprend au moins une des étapes suivantes :
- La localisation immédiate de l'appareil mobile (10) par le véhicule (2) afin de déterminer des informations de dispositif immédiates concernant une position (300) du dispositif mobile (10) par rapport au véhicule (2),
- Localisation immédiatement de l'appareil mobile (10) par une évaluation d'une information d'appareil indirecte reçue par la communication de véhicule (FK), l'information d'appareil indirecte étant de préférence spécifique à la position (300) de l'appareil mobile (10) par rapport à l'au moins un autre véhicule (2'),
- Comparer l'information de dispositif indirecte reçue avec l'information de dispositif directe pour effectuer la localisation, de préférence pour augmenter la précision de la localisation et/ou pour plausibiliser la position (300),
- Effectuer une mesure de distance d'une distance de l'appareil mobile (10) et/ou de l'autre véhicule (2') par rapport au véhicule (2),
- Effectuer une détection de direction d'une direction de l'appareil mobile (10) et/ou de l'autre véhicule (2') par rapport au véhicule (2),
- L'évaluation d'un signal de communication (S) de la communication du véhicule (FK) et/ou de la communication de l'appareil (GK) pour la mesure de la distance, de préférence par une évaluation du signal, de préférence la mesure d'un temps de propagation du signal et/ou d'une intensité du signal,
- L'évaluation d'un signal de communication (S) de la communication de véhicule (FK) et/ou de la communication de l'appareil (GK) pour la détection de la direction, de préférence par une détermination de l'angle de réception, en particulier par une évaluation spécifique à la position de différentes intensités de signal pour différentes unités émettrices-réceptrices (110) du véhicule (2).
